# EUROPEAN PATENT SPECIFICATION

(11) **EP 0 450 925 B1**
(45) Date of publication and mention of the grant of the patent: **02.11.1994**
(21) Application number: 91302897.3
(22) Date of filing: 03.04.1991
(51) Int. Cl.: B62B 9/08, B62B 7/06

(54) **An interlocking brake construction for wheels of a collapsible umbrella stroller**
Verriegeltes Bremssystem für Räder eines zusammenklappbaren Kinderwagens
Système de freinage et de blocage pour roues d'une poussette repliable

(30) Priority: 05.04.1990 GB 9007716
(43) Date of publication of application: 09.10.1991
(73) Proprietor: Nichols, Joanna Ariadne, #B Baldwin Park,Ca., 91706 (US)
(72) Inventor: Cheng, Kenny, Tao Yuan Hsien, Taiwan (TW)
(74) Representative: Barlow, Roy James

(56) References cited:
- EP-A- 0 064 368
- EP-A- 0 344 057
- FR-A- 2 539 691
- GB-A- 2 197 042
- US-A- 4 765 645

## Description

The present invention relates to an interlocking brake construction for wheels of a collapsible umbrella stroller, in particular, to a brake construction comprising an extending bar which is foldable at the center and braking blocks for two rear wheels being mounted to both ends of the foldable bar. The two braking blocks can be operated simultaneously to stop the rotation of the wheels of the stroller to prevent the stroller from collapsing due to "surprise folding".

An umbrella stroller is a type of collapsible stroller which can be collapsed about foldable frames of the stroller and formed into a smaller size stroller, and can be conveniently carried by hanging over one's forearm.

In most conventional strollers, the two front wheels are rotatable about a vertical axis thereof to facilitate the change of direction of the stroller while pushing. In order to avoid "surprise folding" or sliding of the stroller due to negligence, two separate braking means are individually mounted to an individual supporting frame having been provided with the rear wheels. Normally, in these conventional strollers, a plurality of spoke-like protruding elements are provided around the axle on the inner side of the each wheel and, in combination with an engaging element mounted to the braking element, the wheels can be stopped from rotating as the engaging element is engaged with the protruding element of the wheels. This combination forms a braking device for the stroller. However, as the above braking device is separately mounted to the individual rear wheel for braking purposes, if only one of the braking devices is operated without operating the other braking device, i.e., only one wheel is locked, there is a great possibility that the stroller together with the baby will fall to the ground and hurt the baby due to an unbalanced braking force exerted on the wheels. In particular, if the stroller is located on a sloping area or on a bumpy road, it is possible for the stroller to collide with or hit other objects on the road, and thus be overturned. Both of these situations will endanger and hurt the baby in the stroller.

In another conventional type of stroller, which is formed of two crossed bars as a supporting frame for the stroller, an extending plate which is foldable at its center, having a fixing element provided at one end of the folded extending plate, is mounted horizontally to the end terminals of the crossed bars to prevent "surprise folding" or the collapse of the stroller due to the weight of the baby. However, there is a great possibility that the fixing element will dislocate and the supporting frame of the stroller will collapse while the stroller is being pushed on a bumpy road. If the stroller collapses, the baby in the stroller may be hurt.

It is therefore an object of the present invention to provide an interlocking brake construction for collapsible umbrella stroller wheels which can simultaneously and firmly brake the individual wheels of the stroller. This firm braking helps to prevent the overturning of the stroller due to unbalanced forces exerted on the wheel.

It is a further object of the present invention to provide an interlocking brake construction for wheels of a collapsible umbrella stroller, wherein the braking of the wheels is accomplished by a pedal mounted on the foldable extending bar.

FR-A-2539691 discloses a stroller having individual friction brakes which are operated by downward pressure on a double lever linkage extending between the upright support rods of the stroller, the frictional action involving rubbing between brake shoes and the tyres of the stroller.

EP-A-0344057 discloses a stroller having a common brake actuating linkage in the form of a rigid shaft extending between the vertical support columns of the stroller and carrying non-rotatably thereon brake members giving a toothed braking action in response to rotation of the rigid link shaft by pressure of either a brake actuating pedal or a brake releasing pedal at one side of the stroller. There is no way in which this arrangement can be folded to allow the stroller to be as compact, and as useful in practice, as fully collapsible folding strollers which are then capable of being carried over the forearm of the adult user.

The interlocking brake construction for a stroller in accordance with the present invention is characterised by the features of claim 1.

The pre-characterising portion of claim 1 is based on the disclosure of EP-A-0344057.

Other objects of this invention will become apparent as the description proceeds in connection with the accompanying drawings of which:
Fig. 1 is a perspective view showing the interlocking brake construction in accordance with the present invention;
Fig. 2 is a perspective view of the umbrella stroller having the interlocking brake construction mounted at the rear wheels thereof;
Fig. 3 is an enlarged side view of the interlocking brake construction in accordance with the present invention;
Fig. 4 is a schematic view of the foldable extending bar, illustrating the folding operation thereof;
Fig. 5 is a perspective view of the connecting piece mounted to one terminal end of the foldable extending bar in accordance with the present invention;
Fig. 6 is a cross-sectional view along line 6-6 of Fig. 5;
Fig. 7 is a cross-sectional view along line 7-7 of Fig. 5; and
Figs. 8 and 9 are perspective views illustrating the collapsible prevention means of the prior art.

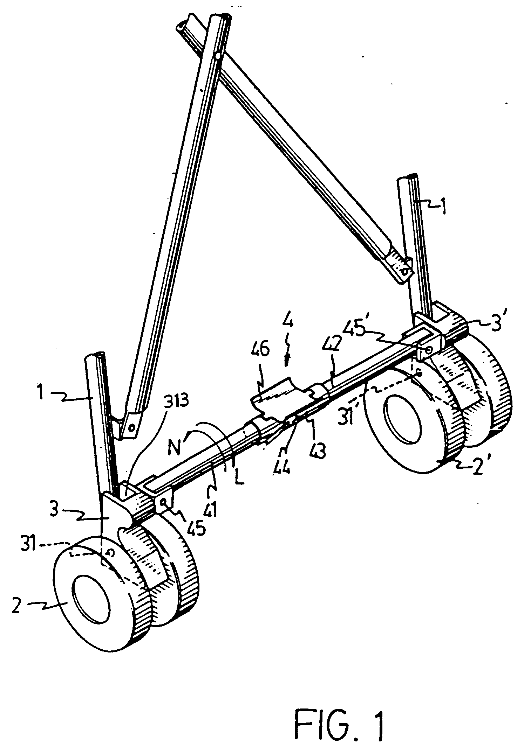

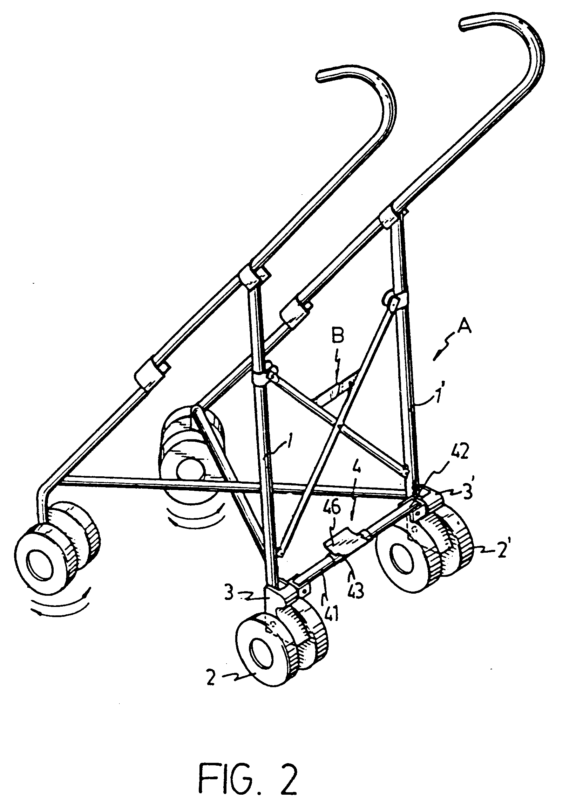

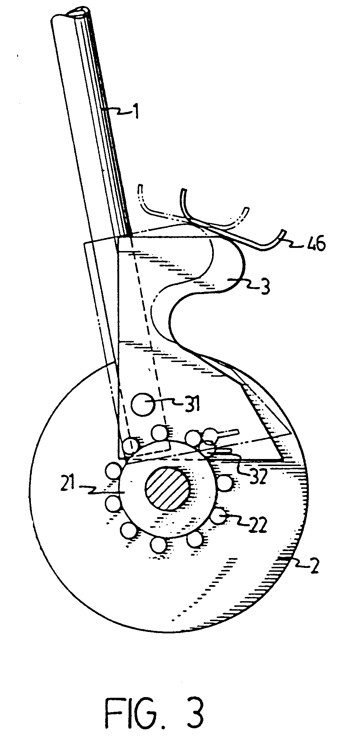

Referring to Figs. 1 to 3, in particular to Fig. 1, the preferred embodiment of the present invention, of an interlocking brake construction for wheels of a collapsible stroller, comprises a pair of supporting rods 1, 1' each being individually connected with a wheel 2, 2' at the bottom end thereof, a pair of wheel braking blocks 3, 3', an extending bar 4 foldable at its center to form two side bars 41, 42. The supporting rods 1, 1' are similar to the vertical rear bars of the conventional stroller, as shown in Fig. 2, of which the bottom ends carry respective sets of wheels 2, 2'. As shown in Fig. 3, the internal surface of each of the wheels 2, 2' is provided with a sleeve 21 at the rotation axis of the wheel. A plurality of protruding elements 22 are mounted around the external edge of the sleeve at equiangular intervals.

Referring again to Figs, 1 to 3, in particular to Fig. 1, the two braking blocks 3, 3', each have a cavity on one face thereof conforming to the associated one of the supporting bars 1, 1'. The lower portion of the braking block 3, 3' is pivotally mounted to the supporting rod 1, 1', with the rod 1, 1' received within the cavity 313, by a peg 31, 31' and this allows said braking block 3, 3' to pivot up and down by pivoting about the peg 31, 31'. As shown in Fig. 3, a blocking element 32 is formed at the lower end of the braking block 3, 3' such that the blocking element 32 can be engaged with the protruding elements 22 at the spaces formed therebetween. Thus, the wheel can be stopped from rotating.

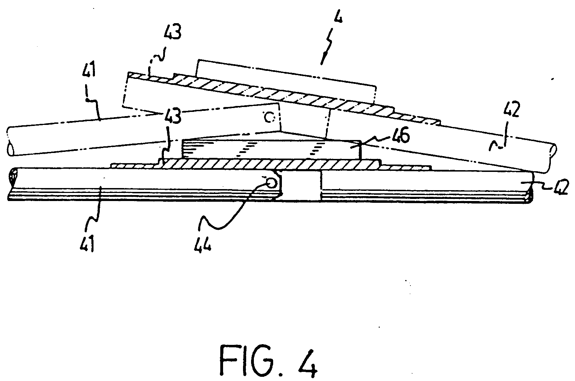

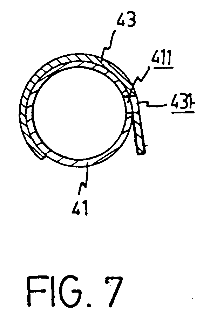

Referring now to Fig. 4, the foldable extending bar 4 is formed from two side bars 41, 42 connected to form an interlocking bar by a connecting piece 43 having a pedal 46 mounted on the top surface thereof, wherein the connecting piece 43 is a semi-circular tube open at the bottom portion thereof, as shown in Fig. 7. The connecting piece 4 is mounted to one end of the side bars 41, 42 with a peg 44 and can be engaged with the other end of the other side bars 41, 42 by pressing the pedal 46 downward. The connecting piece 43 is made of a resilient material such as PVC or other plastic. The open semi-circular tube can resiliently engage with the terminal end of the side bars 41, 42. The terminal ends of the foldable extending bar 4 are respectively mounted to the braking block 3, 3' by pegs 45, 45'.

If the two braking blocks 3, 3' are to be operated, the connecting piece 43 is pressed down by applying downward force onto the pedal 46. If the pedal 46 is operated in the direction as shown by arrow L of Fig. 1, the foldable extending bar 4 will produce a torque which causes the blocking element 32 at the lower portion of the braking block 3, 3' to engage into the space formed between two adjacent ones of the protruding elements 22. As a result, the wheels 2, 2' of the stroller can be prevented from rotating.

If the wheels 2, 2' of the stroller are to be released from the locking position, the pedal 46 is pulled up in the direction indicated by N, as shown in Fig. 1. Thus, the blocking element 32 will disengage from the wheels 2, 2' of the stroller. Owing to the fact that the two braking blocks 3, 3' stop the wheels 2, 2' and strengthen the frame of the stroller simultaneously, the possibility of collapse due to unbalanced forces exerted on the wheels 2, 2' and "surprise folding" will be mitigated.

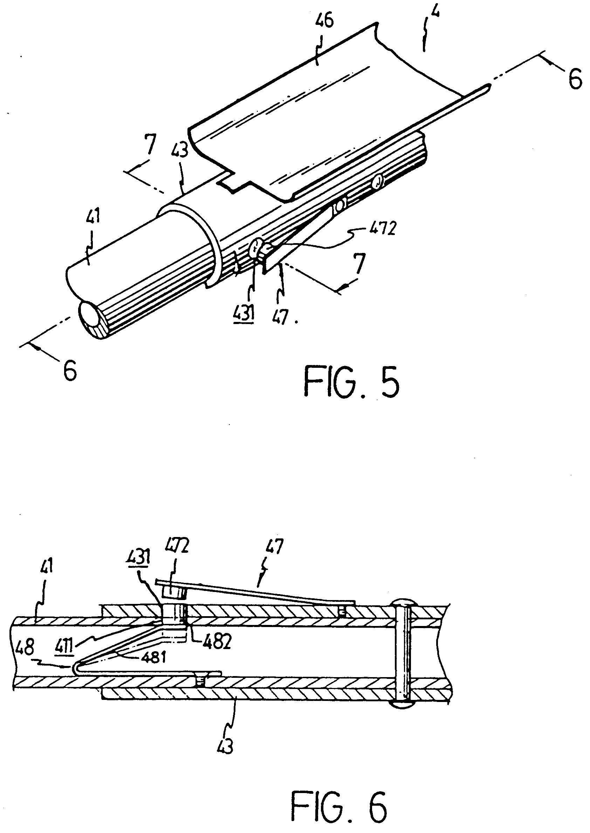

Referring to Figs. 5 and 6, the external surface of the connecting piece 43 and the side 41 at one end thereof are respectively provided with apertures 431 and 411 which are aligned with each other. As locking member, a leaf spring 481 having a fixing protrusion 482 is mounted within the side bar 41. The protrusion 482 is spring-biassed by the spring force of the leaf spring 481 through the aperture 411 to enter the aperture 431 so as to lock axially the position of the side bar 41 relative to the connecting piece 43.

Figs. 5 and 6 also show an unlocking member 47 also in the form of a leaf spring having one end mounted on the exterior surface of the connecting piece 43 and having at its other (free) end a protrusion 472.

As shown in Figs. 5 and 6, the protrusion 482 of the leaf spring 481 passes through the aperture 411. In order to erect the umbrella stroller, the connecting piece 43 is pulled outwardly of the side bar 41 so that the leaf spring 481 presses its protrusion 472 into the aperture 431 to lock the connecting piece 43 and side bar 41 together. If the stroller is to be collapsed, the unlocking member (leaf spring) 47 is pressed against the connecting piece to force the protrusion 472 at the end of the unlocking member 47 into the aperture 431, thereby forcing out of the aperture 431 the locking protrusion 482 thus disconnecting the side bar 41 from the connecting piece 43.

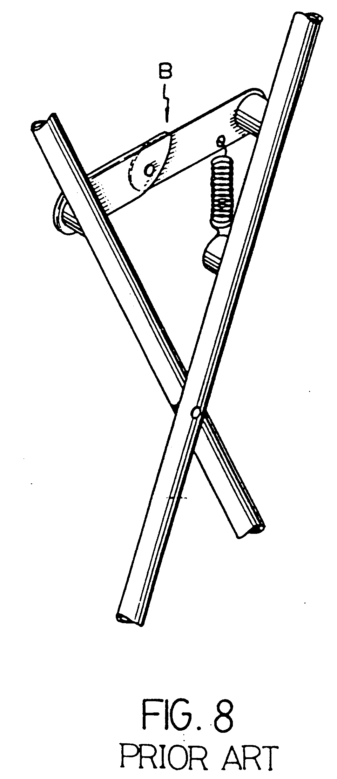

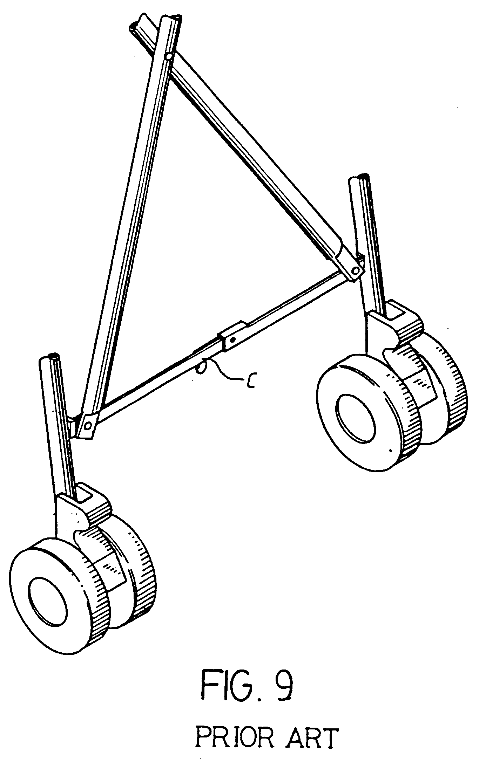

Figs. 8 and 9 illustrate the conventional type of foldable rod and locking means for the prevention of "surprise folding". As can be seen in these Figures, a horizontal plate B mounted in between two supporting rods of the stroller is used in the prevention of "surprise folding".

The above description provides an interlocking brake construction for the wheels of the collapsible umbrella stroller, wherein the extending bar 4 also provides a supporting and locking means for the stroller so as to prevent the collapsing of the stroller due to "surprise folding". Also the interlocking brake construction is of highly economical construction.

## Claims

1. An interlocking brake construction for wheels of a collapsible umbrella stroller, comprising a substantially parallel pair of vertical rear supporting rods (1,1') having mounted at one end thereof a pair of wheels (2,2'), braking means (3,32) engageable with members (22) carried by the wheels for actuation to prevent rotation of the wheels, and a common link shaft (4) connected to the two braking means for ensuring simultaneous operation of the braking means upon operation of said common operating shaft,
characterized in that the members carried by the wheels comprise a plurality of protruding elements (22) arranged at equiangular intervals around the axles of said wheels (2,2');
in that the braking means comprise a pair of braking blocks (3,3'), each (i) having one end pivotally mounted to a said rear supporting rod (1,1') by means of a peg (31) to allow up and down movement of the braking block by pivoting about the peg, (ii) having a cavity (313) on one face thereof to receive a said supporting rod (1,1'), and (iii) having, carried by the lower portion of said braking block, a blocking element (32) which is engageable between the protruding elements (22) to prevent the wheels of the stroller from rotating;
in that the common actuating shaft comprises a foldable extending bar (4) consisting of two side bars (41,42) mounted horizontally to the braking blocks (3,3') at the lateral side thereof, the extending bar (4) being foldable at its centre; and
in that the foldable extending bar (4) has a connecting piece (43) carrying a pedal (46) mounted at one end of one (42) of the side bars, said connecting piece (43) being of tubular shape and open at the bottom portion thereof;
whereby the foldable extending bar (4) simultaneously provides a horizontal bracing support and inter-locking means to the stroller and by pressure on the pedal (46) causes pivotting of the brake blocks so as to prevent the wheels of the stroller from rotating.

2. An interlocking brake construction for wheels as set forth in claim 1, wherein the connecting piece (43) is made from resilient material which provides a resilient connection to the foldable extending bar (4) when a force is applied to the connecting piece (43).

3. An interlocking brake construction for wheels as set forth in claim 1 or 2, wherein apertures (431,411) are individually provided in both the connecting piece (43) and the surface of the terminal end of one (41) of the side bars, and the apertures are aligned, and a leaf spring (481) mounted within one (41) of the side bars, has a locking protrusion (482) at one end provided so that the locking protrusion can be engaged with the apertures.

4. An interlocking brake construction for wheel as set forth in claim 3, including a resilient unlocking element (47) having a protrusion (472) to be inserted into the aperture (431) to dislocate the locking protrusion (482) of the leaf spring (481) within the side bar (41).

## Patentansprüche

1. Verriegelungsbremskonstruktion für die Räder eines zusammenklappbaren, schirmartig tragbaren Kindersportwagens, mit einem im wesentlichen parallelen Paar an vertikalen hinteren Stützstangen (1, 1'), an deren einem Ende ein Paar von Rädern (2, 2') angebracht sind, Bremsmitteln (3, 32), die mit Elementen (22), die von den Rädern getragen werden, zur Betätigung in Eingriff gebracht werden können, um eine Rotation der Räder zu verhindern, und einer gemeinsamen Verbindungsgliedwelle (4), die mit den beiden Bremsmitteln verbunden ist, um eine gleichzeitige Betätigung der Bremsmittel zu gewährleisten, wenn diese gemeinsame Betätigungswelle betätigt wird,
dadurch gekennzeichnet, daß die von den Rädern getragenen Elemente eine Vielzahl von vorspringenden Elementen (22) umfassen, die in gleichwinkligen Abständen um die Tragachsen der Räder (2, 2') herum angeordnet sind; daß die Bremsmittel ein Paar von Bremsblöcken (3, 3') umfassen, von denen jeder (i) ein Ende aufweist, das durch einen Zapfen (31) verschwenkbar an der hinteren Stützstange (1 1') angebracht ist, um eine Auf- und Abbewegung des Bremsblocks durch Verschwenken um den Zapfen zu erlauben, (ii) an einer Seite davon einen Hohlraum (313) aufweist, um eine Stützstange (1, 1') aufzunehmen, und (iii) ein Blockierelement (32) aufweist, das von dem unteren Abschnitt des Bremsblocks getragen wird, und das zwischen den vorspringenden Elementen (22) in Eingriff kommen kann, um die Räder des Kindersportwagens am Rotieren zu hindern;
daß die gemeinsame Betätigungswelle eine zusammenfaltbare Steckstange (4) umfaßt, die aus zwei Seitenstangen (41,42) besteht, die horizontal an den Bremsblöcken (3, 3') an der lateralen Seite davon angebracht sind, wobei die Steckstange (4) in ihrer Mitte zusammenfaltbar ist, und
daß die zusammenfaltbare Steckstange (4) ein Verbindungsstück (43) aufweist, das ein Pedal (46) trägt, das an einem Ende einer (42) der Seitenstangen angebracht ist, wobei das Verbindungsstück (43) eine rohrförmige Gestalt aufweist und an seinem Bodenabschnitt offen ist;
wodurch die zusammenfaltbare Steckstange (4) gleichzeitig eine horizontale Versteifungsstütze und ein Verriegelungsmittel für den Kindersportwagen vorsieht und durch Druck auf das Pedal (46) ein Verschwenken der Bremsblöcke bewirkt, um so zu verhindern, daß sich die Räder des Kindersportwagens drehen.

2. Verriegelungsbremskonstruktion für Räder nach Anspruch 1, bei der das Verbindungsstück (43) aus einem elastischen Material hergestellt ist, welches eine elastische Verbindung mit der zusammenfaltbaren Steckstange (4) vorsieht, wenn eine Kraft an das Verbindungsstück (43) angelegt wird.

3. Verriegelungsbremskonstruktion für Räder nach Anspruch 1 oder 2, bei der Öffnungen (431,411) unabhängig voneinander in sowohl dem Verbindungsstück (43) als auch der Oberfläche des Anschlußendes einer (41) der Seitenstangen vorgesehen sind, und die Öffnungen ausgerichtet sind, und bei der eine Blattfeder (481), die in einer (41) der Seitenstangen angebracht ist, an einem Ende mit einem Verriegelungsvorsprung (482) versehen ist, so daß der Verriegelungsvorsprung mit den Öffnungen in Eingriff gebracht werden kann.

4. Verriegelungsbremskonstruktion für Räder nach Anspruch 3, umfassend ein elastisches Entriegelungselement (47) mit einem Vorsprung (472), der in die Öffnung (431) eingeführt werden soll, um den Verriegelungsvorsprung (482) der Blattfeder (481) in der Seitenstange (41) zu versetzen.

## Revendications

1. Système de freinage et de blocage pour roues d'une poussette repliable, comprenant une paire de barres verticales de support arrière (1, 1'), parallèles, comportant à l'une de leurs extrémités une paire de roues (2, 2'), des moyens de freinage (3,32) pouvant être mis en prise avec des éléments (22) portés par les roues pour empêcher la rotation des roues, et une barre de liaison commune (4) reliée aux deux moyens de freinage pour assurer le fonctionnement simultané des moyens de freinage lorsque ladite barre de liaison est manoeuvrée,
caractérisé en ce que les éléments portés par les roues comprennent un ensemble d'éléments en saillie (22), disposés selon des angles identiques autour des axes desdites roues (2, 2') ;
en ce que les moyens de freinage comprennent une paire de blocs de freinage (3, 3'), chacun (i) ayant une extrémité pouvant pivoter autour d'une desdites barres de support arrière (1, 1') au moyen d'un axe (31) pour permettre le déplacement vers le haut ou vers le bas du bloc de freinage par pivotement autour de l'axe, (ii) ayant une partie en creux (313) sur l'une de ses faces pour recevoir l'une desdites barres de support (1, 1') et (iii) ayant un élément de blocage (32), porté par la partie inférieure dudit bloc de freinage et prévu pour s'engager entre les éléments saillants (22) pour empêcher la rotation des roues de la poussette ;
en ce que la barre de manoeuvre commune comprend une barre de liaison pliante (4) constituée par deux barres latérales (41, 42), montées horizontalement sur les blocs de freinage (3, 3') à l'une de leurs extrémités latérales, la barre de liaison pliante (4) pouvant se replier en son milieu ; et
en ce que la barre de liaison pliante (4) dispose d'une pièce de connexion (43) portant une pédale (46) montée à l'une des extrémités de l'une (42) des barres latérales, ladite pièce de connexion (43) étant de forme tubulaire et ouverte à sa partie inférieure ;
dans lequel la barre de liaison pliante (4) constitue à la fois un support horizontal d'entretoisement et un moyen de blocage de la poussette lorsqu'une pression est exercée sur la pédale (46), les blocs de freinage pivotant de façon à empêcher la rotation des roues de la poussette.

2. Système de freinage et de blocage pour roues selon la revendication 1, dans lequel la pièce de connexion (43) est fabriquée en matériau élastique pour réaliser une liaison élastique avec la barre de liaison pliante (4), lorsqu'une force est appliquée sur la pièce de connexion (43).

3. Système de freinage et de blocage pour roues selon les revendications 1 ou 2, dans lequel des ouvertures individuelles (431, 411) sont prévues à la fois dans la pièce de connexion (43) et à la surface de l'extrémité de l'une (41) des barres latérales, ces ouvertures étant alignées et un ressort à lame (481) monté à l'intérieur de l'une (41) des barres latérales, comportant une partie saillante de blocage (482) à l'une de ses extrémités, de telle sorte que la partie saillante de blocage puisse s'engager dans les ouvertures.

4. Système de freinage et de blocage pour roues selon la revendication 3, comportant un élément élastique de déblocage (47) avec une partie saillante (472) prévue pour s'engager dans l'ouverture (431) afin de repousser la partie saillante de blocage (482) du ressort à lame (481) à l'intérieur de la barre latérale (41).
